# EUROPÄISCHE PATENTSCHRIFT

(11) **EP 3 737 882 B1**
(45) Veröffentlichungstag und Bekanntmachung des Hinweises auf die Patenterteilung: **16.03.2022**
(21) Anmeldenummer: 18826695.1
(22) Anmeldetag: 21.12.2018
(51) Int. Cl.: F16K 31/10, F16K 31/50, F16K 31/56, F16K 31/04, F16K 31/06

(54) **VENTILANTRIEB MIT SCHNELLFAHRFUNKTION**
VALVE DRIVE WITH SNAP FUNCTION
ENTRAÎNEMENT DE SOUPAPE PRÉSENTANT UNE FONCTION DE DÉPLACEMENT RAPIDE

(30) Priorität: 11.01.2018 DE 102018100519
(43) Veröffentlichungstag der Anmeldung: 18.11.2020
(73) Patentinhaber: Voith Patent GmbH, 89522 Heidenheim (DE)
(72) Erfinder: LINDÖRFER, Steffen, 74575 Schrozberg (DE); GOLL, Armin, 74673 Mulfingen (DE); NOTAR, Walter, 89264 Weissenhorn (DE); SCHUSTER, Harald, 89143 Blaubeuren (DE); WERNER, Martin, 89129 Langenau (DE)
(86) Internationale Anmeldenummer: PCT/EP2018/086452
(87) Internationale Veröffentlichungsnummer: WO 2019/137795

(56) Entgegenhaltungen:
- WO-A1-01/14775
- WO-A2-2010/128952
- DE-U1- 29 801 229

## Beschreibung

Die vorliegende Erfindung betrifft einen Ventilantrieb mit Schnellfahrfunktion, insbesondere Schnellschlussfunktion, sowie ein Ventil mit einem solchen Ventilantrieb und die Verwendung eines solchen Ventilantriebs.

Ventile mit einer Schnellschlussfunktion beziehungsweise Ventilantriebe hierfür werden beispielsweise bei Dampfturbinen verwendet, um bei einem Lastabwurf die Dampfzufuhr zu einer Dampfturbine möglichst rasch stoppen zu können. Ein solches Schnellschlussventil beziehungsweise der Ventilantrieb hierfür, wie ihn die vorliegende Erfindung gemäß einer Ausführungsform betrifft, weist nur die Schnellschlussfunktion auf, ohne eine zusätzliche Regel- oder Steuerfunktion, sodass zur Regelung oder Steuerung das Schnellschlussventil in Reihe zu einem Regel- oder Steuerventil geschaltet werden muss. Bei einer anderen Anwendung, wie sie die vorliegende Erfindung ebenfalls betrifft, ist das Ventil als sogenanntes Kombiventil ausgeführt und der Ventilantrieb weist dementsprechend eine Regel- oder Steuerfunktion und die genannte Schnellschlussfunktion auf.

Dementsprechend kann es bei Ventilantrieben, wie sie die vorliegende Erfindung betrifft, im erstgenannten Fall ausreichend sein, wenn mit dem Ventilantrieb ein Ventilkörper zwischen einer vollständig geschlossenen Stellung des Ventils und einer vollständig geöffneten Stellung des Ventils bewegbar ist, wohingegen im zweiten Anwendungsfall der Ventilkörper mit dem Ventilantrieb auch in stabile Zwischenstellungen zwischen dem vollständig geschlossenen Zustand und dem vollständig geöffneten Zustand des Ventils verbringbar ist, um einen Strömungsquerschnitt variabel einzustellen.

Ventilantriebe mit einer Schnellschlussfunktion gemäß dem Stand der Technik weisen einen Kraftspeicher auf, vorliegend Schnellschlussfeder genannt, die beim Auslösen des Schnellschlusses die notwendige Betätigungskraft aufbringt, um das Ventil rasch in die geschlossene Stellung zu bewegen. Die Schnellschlussfeder wirkt permanent in Richtung einer Schließstellung des Ventilantriebs beziehungsweise in Richtung einer Schließbewegung des Ventilantriebs und wird bei Regelvorgängen durch entsprechendes Verfahren des Ventilkörpers mehr oder minder gespannt. Um ein ausreichend schnelles und sicheres Schließen des Ventils im Schnellschlussfall sicherzustellen, weist die Schnellschlussfeder eine erhebliche Schließkraft auf, die beim Verfahren des Ventilkörpers somit permanent überwunden oder gehalten werden muss. Solange hydraulisch betätigte Ventilantriebe verwendet werden, stellen diese hohen Schließkräfte der Schnellschlussfeder kein Problem dar. DE 10 2013 003 976 Beispiel offenbart ein Beispiel für ein Schnellschlussventil mit hydraulischem Aktuator.

Um den erheblichen System- und Wartungsaufwand für hydraulisch arbeitende Schnellschlussventile zu vermeiden, wurden elektromechanische Antriebe vorgeschlagen, bei denen eine Verstellung des Ventilkörpers mittels eines Elektromotors über ein geeignetes Schraubgetriebe erfolgt, das die Drehbewegung des Elektromotors in eine Linearbewegung umwandelt. Ausführungsbeispiele werden in EP 2 110 592 A2 und DE 44 46 605 A1 offenbart. Nachteilig bei diesen Ausführungsformen ist, dass hier der Elektromotor bei der Verstellung der Ventilspindel permanent gegen die Schließkraft einer Schnellschlussfeder arbeiten muss, welche die Schnellschlussfunktion sicherstellt. Dementsprechend muss der Elektromotor entsprechend stark ausgeführt sein und in der Lage sein, diese Schließkraft über lange Zeiträume hinweg zu halten.

EP 0 981 001 A2 offenbart einen Ventilantrieb mit Schnellschlussfunktion, wobei der Ventilantrieb mittels eines Elektromotors über einen Linearaktuator angetrieben wird und eine Entkopplung der Federkraft der Schnellschlussfeder von der Verstellkraft des Elektromotors bei der normalen Regelfunktion des Ventils vorgesehen ist. So bewegt der Elektromotor über den Linearaktuator eine Spindel entlang einer Längsachse, um dadurch einen Ventilkörper entsprechend in Richtung dieser Längsachse zu bewegen. Die Spindel ist über einen Schnellschlussmechanismus am Ventilschaft angeschlossen, wobei der Schnellschlussmechanismus in einer Verriegelungsposition die Spindel formschlüssig mit dem Ventilschaft verbindet und beim Übergang in eine Schnellschlussposition die Verriegelung aufhebt, sodass zwei Teile des Schnellschlussmechanismus durch die Kraft einer vorgespannten Schnellschlussfeder auseinander gefahren werden, um den Ventilschaft weg von der Spindel zu bewegen und dadurch das Ventil zu schließen. Da der Verriegelungsmechanismus allein durch die Verriegelung in der Verriegelungsposition die Federkraft der Schnellschlussfeder blockiert, lastet diese Federkraft nicht auf dem Antrieb. Nachteilig bei dieser Ausführungsform ist der vergleichsweise komplizierte Mechanismus zum sicheren Halten der Federkraft der Schnellschlussfeder, wobei zugleich ein sicheres Auslösen der Schnellschlussfunktion und ein sicheres Verbringen des Mechanismus in seine verriegelte Position garantiert werden muss.

Der vorliegenden Erfindung liegt die Aufgabe zugrunde, ausgehend vom zitierten Stand der Technik mit einer Entkoppelung der Kraft der Schnellschlussfeder von der Antriebskraft in einem nicht ausgelösten Schnellschlusszustand einen Ventilantrieb zu schaffen, dessen Aufbau mechanisch weniger komplex ist und damit in der Praxis zuverlässiger arbeitet. Der Aufbau soll sich ferner durch eine kompakte und vergleichsweise kostengünstige Konstruktion auszeichnen. DE29801229U1 offenbart einen Ventilantrieb mit Schnellfahrfunktion nach dem Stand der Technik. WO2010/128952A2 offenbart einen Ventilantrieb mit Schnellfahrfunktion nach dem Oberbegriff des Anspruchs 1.

Die erfindungsgemäße Aufgabe wird durch einen Ventilantrieb mit den Merkmalen von Anspruch 1 gelöst. In den weiteren Ansprüchen werden bevorzugte und besonders zweckmäßige Ausgestaltungen der Erfindung sowie ein Ventil und die Verwendung eines erfindungsgemäßen Ventilantriebs angegeben.

Ein erfindungsgemäßer Ventilantrieb umfasst einen Drehantriebseingang sowie eine am Drehantriebseingang angeschlossene oder durch diesen Drehantriebseingang gebildete Gewindespindel. Die Gewindespindel steht mit einem Schlitten im Eingriff, um ein Schraubgetriebe auszubilden. Demnach wird eine Drehbewegung am Drehantriebseingang in eine Linearbewegung des Schlittens gewandelt, wobei sich der Schlitten entlang einer Längsachse bewegen kann.

Der Schlitten ist mechanisch mit einem Ventilkörper verbunden oder verbindbar, um durch ein Verfahren des Schlittens in Richtung der Längsachse entsprechend einen angeschlossenen Ventilkörper relativ zu einem Ventilsitz zu verfahren, um ein Ventil zu öffnen und/oder zu schließen.

Der Ventilantrieb weist eine Schnellfahrfunktion auf, die entweder als Schnellschlussfunktion oder als Schnellöffnungsfunktion ausgeführt ist. Dadurch kann der Ventilantrieb in einem Auslösefall schlagartig verfahren werden, um ein angeschlossenes Ventil in eine geschlossene oder geöffnete Position zu verbringen.

Gemäß einer Ausführungsform ist das Ventil als Auf-Zu-Ventil ausgeführt, das heißt der Ventilkörper ist nur zwischen einer vollständig geöffneten Stellung des Ventils und einer geschlossenen Stellung des Ventils verfahrbar, ohne stabile Zwischenpositionen, oder das Ventil ist als Steuer- oder Regelventil ausgeführt, bei welchem der Ventilkörper zusätzlich in stabile Zwischenstellungen zwischen einer Auf-Stellung und einer Zu-Stellung des Ventils verfahrbar ist. Im erstgenannten Fall weist der Ventilantrieb entsprechend nur eine Schnellfahrfunktion, insbesondere Schnellschlussfunktion auf, im zweitgenannten Fall zusätzlich eine Steuer- oder Regelfunktion.

Erfindungsgemäß umfasst der Ventilantrieb ein Lagergehäuse, in welchem die Gewindespindel drehbar um die Längsachse und ortsfest in Richtung der Längsachse gelagert ist. Das bedeutet, die Gewindespindel wird nicht innerhalb des Lagergehäuses beziehungsweise relativ zum Lagergehäuse in Richtung der Längsachse, das heißt in ihrer Axialrichtung, verfahren.

Das Lagergehäuse ist mittels einer lösbaren Verriegelungseinrichtung entgegen der Vorspannkraft einer Schnellfahrfeder, insbesondere Schnellschlussfeder, gegen eine Verschiebung in Richtung der Längsachse gehalten. Somit kann für einen Schnellschluss oder ein schnelles Öffnen des Ventils die Verriegelungseinrichtung gelöst werden und das gesamte Lagergehäuse mit der darin gelagerten Gewindespindel in Richtung der Längsachse bewegt werden, angetrieben durch die Kraft der sich entspannenden Schnellfahrfeder. Zugleich verhindert die Verriegelungseinrichtung im verriegelten Zustand, dass die Vorspannkraft der Schnellfahrfeder auf den Drehantriebseingang wirkt.

Dadurch, dass das gesamte Lagergehäuse mit der Federkraft der Schnellfahrfeder verfahrbar ist, kann auf einen komplizierten Aufbau der Verriegelungseinrichtung verzichtet werden. So ist es beispielsweise möglich, die Verriegelungseinrichtung außen am Lagergehäuse vorzusehen, wo entsprechender Bauraum zur Verfügung steht. Bevorzugt ist der Verriegelungsmechanismus jedoch radial innerhalb der Schnellfahrfeder positioniert, die durch ihre entsprechend radial äußere Anordnung einen vergleichsweise großen Durchmesser aufweisen kann und dadurch besonders stark ausgeführt werden kann.

Bevorzugt umfasst das Lagergehäuse einen Hohlzylinder oder wird durch diesen gebildet, welcher Lagerstellen, insbesondere Wälzlager, und zumindest einen axialen Abschnitt der Gewindespindel, der in den Lagerstellen gelagert ist, umschließt. So kann die Gewindespindel beispielsweise einen ersten axialen Abschnitt aufweisen, der in den Lagerstellen gelagert ist und frei von einem Gewinde ist, sowie einen sich anschließenden zweiten axialen Abschnitt, der ein Gewinde, insbesondere Außengewinde trägt, auf welchem der Schlitten mit einem entsprechenden Gegengewinde, insbesondere Innengewinde, zu seiner Verschiebung angeordnet ist.

Die Schnellfahrfeder ist beispielsweise als Druckfeder oder Druckspiralfeder ausgeführt und umschließt das Lagergehäuse, wie dargelegt, bevorzugt radial außen. Grundsätzlich sind jedoch auch Ausgestaltungen möglich, bei welchen die Schnellfahrfeder radial innerhalb des Lagergehäuses vorgesehen ist.

Gemäß der Erfindung umfasst die Verriegelungseinrichtung wenigstens einen hakenförmigen Riegel, der in Radialrichtung derart zum Lagergehäuse bewegbar ist, dass er in einer ersten Position, der Verriegelungsposition, formschlüssig in das Lagergehäuse eingreift und in einer zweiten Position, der Schnellfahrposition, insbesondere Schnellschlussposition, den Eingriff in das Lagergehäuse aufhebt, sodass sich in dieser Schnellfahr- beziehungsweise Schnellschlussposition das Lagergehäuse beaufschlagt durch die Vorspannkraft der Schnellfahrfeder in Richtung der Längsachse bewegt. Bevorzugt greift der hakenförmige Riegel in der Verriegelungsposition radial von außen in das Lagergehäuse ein.

Gemäß einer Ausführungsform der Erfindung sind mehrere über dem Umfang des Lagergehäuses verteilt angeordnete hakenförmige Riegel vorgesehen.

Beispielsweise ist ein den wenigstens einen hakenförmigen Riegel in der Radialrichtung umschließender Steuerring vorgesehen, der in Richtung der Längsachse bewegbar ist zwischen einer ersten Position, in welcher er den wenigstens einen Riegel gegen dessen Bewegung aus der Verriegelungsposition in die Schnellfahrposition blockiert, und einer zweiten Position, in welcher er die Bewegung des Riegels aus der Verriegelungsposition in die Schnellfahrposition freigibt. Wenn mehrere Riegel vorgesehen sind, werden diese bevorzugt gemeinsam von ein und demselben Steuerring umschlossen.

Der wenigstens eine Riegel ist bevorzugt als selbstöffnender Riegel ausgeführt. Das bedeutet, dass, wenn die Schnellfahrfeder das Lagergehäuse in Richtung der Längsachse kraftbeaufschlagt und eine Blockade des wenigstens einen Riegels gegen dessen Bewegung aus der Verriegelungsposition in die Schnellfahrposition aufgehoben ist, weil beispielsweise der Steuerring entsprechend verschoben wurde, allein die Vorspannkraft der Schnellfahrfeder und die Gestaltung der Angriffsflächen zwischen Riegel und Lagergehäuse ausreicht, den Riegel in die Schnellfahrposition zu bewegen.

Der Steuerring wird beispielsweise von einem Magnetaktuator entgegen einer Federkraft in seiner ersten Position gehalten, um in dieser Position den Riegel in der Verriegelungsposition zu blockieren.

Es kann ein Federspeicher vorgesehen sein, der die Federkraft für den Steuerring erzeugt, wobei der Federspeicher bevorzugt ein Federsystem umfasst, mit wenigstens einer ersten Feder und einer zweiten Feder, beispielsweise mit zueinander verschiedenen Federkennlinien, wobei die erste Feder nur über einen Teil eines Wegbereichs der zweiten Feder wirksam ist, um bei der Bewegung des Steuerrings aus seiner ersten Position in die zweite Position eine vergleichsweise verstärkte Losreißkraft zu erzeugen. Beispielsweise umfasst das Federsystem als erste Feder wenigstens eine Tellerfeder und als zweite Feder wenigstens eine Spiraldruckfeder.

Gemäß einer Ausführungsform der Erfindung weist der Drehantriebseingang ein Eingangsrad auf, insbesondere Eingangszahnrad, das über eine Steckverbindung mit der Gewindespindel verbunden ist, wobei die Gewindespindel in Richtung der Längsachse verschiebbar in der Steckverbindung gelagert ist, um gemeinsam mit dem Lagergehäuse relativ zum Eingangsrad verschoben zu werden, wenn ein schnelles Verfahren, insbesondere ein Schnellschluss, ausgelöst wird.

Der wenigstens eine hakenförmige Riegel kann insbesondere um eine tangential zur Längsachse ausgerichtete Drehachse verdrehbar sein und in der Verriegelungsposition an einem Fixierpunkt an dem Lagergehäuse angreifen, wobei der Fixierpunkt auf einem anderen Durchmesser, beispielsweise auf einem kleineren Durchmesser, als die Drehachse positioniert ist. Dadurch kann insbesondere die dargestellte Ausführungsform als selbstöffnender Riegel leicht erreicht werden.

Bevorzugt ist der Schlitten zumindest mittelbar in Richtung der Längsachse abstützbar und die Schnellfahrfeder ist im abgestützten Zustand des Schlittens durch Antreiben der Gewindespindel und infolgedessen durch Verschieben des Lagergehäuses in der Längsrichtung spannbar. Die Abstützung des Schlittens kann beispielsweise mittelbar über die Abstützung des Ventilkörpers in einem Ventilgehäuse, insbesondere auf dem Ventilsitz erfolgen. Alternative Abstützmaßnahmen sind vorstellbar.

Gemäß einer Ausführungsform der Erfindung ist das Lagergehäuse in Richtung der Längsachse verschiebbar in einem Stützrohr gelagert, das ein Axialende zum Anschluss eines Ventilgehäuses aufweist. Somit kann das Stützrohr starr am Ventilgehäuse angeschlossen werden, das Lagergehäuse, insbesondere in Form des Hohlzylinders starr am Ventilkörper. Das Stützrohr umschließt das Lagergehäuse vorteilhaft auf dessen radialen Außenseite, weist also einen größeren Durchmesser als das Lagergehäuse, insbesondere der Hohlzylinder des Lagergehäuses auf. Der wenigstens eine Riegel kann bevorzugt am Stützrohr gelagert sein, vorteilhaft auf einer Außenseite desselben, um radial von außen in das Lagergehäuse einzugreifen, insbesondere durch im Stützrohr eingebrachte Aussparungen, beispielsweise Langlöcher.

Der Steuerring kann zum Spannen der Schnellfahrfeder gemeinsam mit dem Lagergehäuse in der Längsrichtung verfahrbar sein und dadurch über den wenigstens einen Riegel zur Blockade des Riegels in der Verriegelungsposition verschiebbar sein.

Hierfür weist der wenigstens eine Riegel bevorzugt auf einer dem Steuerring zugewandten Oberfläche eine Schräge zur Längsachse auf, an welcher der Steuerring angreift, und/oder der Steuerring weist auf einer dem Riegel zugewandten Oberfläche eine Schräge zur Längsachse auf, mit welcher er an dem wenigstens einen Riegel angreift. Damit kann durch das Verschieben des Steuerrings in der Längsrichtung der Riegel durch den Steuerring in seine Verriegelungsposition im Eingriff mit dem Lagergehäuse bewegt werden.

Gemäß einer Ausführungsform der Erfindung ist am Lagergehäuse ein Federteller fixiert, welcher das Stützrohr über dessen radial äußeren Umfang umschließt. Die Schnellfahrfeder kann dann an diesem Federteller abgestützt sein, um über den Federteller die Federkraft der Schnellfahrfeder auf das Lagergehäuse zu übertragen. Beispielsweise sind im Stützrohr in der Längsrichtung verlaufende Langlöcher vorgesehen, durch welche hindurch der Federteller mit entsprechenden Streben, Bolzen oder Schrauben am Lagergehäuse befestigt ist. Das andere axiale Ende der Schnellfahrfeder kann insbesondere in einem Gehäuse des Ventilantriebs und/oder an einem Flansch des Stützrohres abgestützt sein.

Gemäß einer besonders bevorzugten Ausführungsform der Erfindung weist die Verriegelungseinrichtung neben dem Steuerring und insbesondere dem Magnetaktuator einen Axialschieber auf, der zur Verschiebung des Steuerrings am Steuerring angeschlossen ist, wobei der Axialschieber in der Längsrichtung neben dem Federteller positioniert ist und in einem Betriebszustand des Ventilantriebs, das heißt vor einer Auslösung des schnellen Verfahrens, insbesondere Schnellschlusses, einen Axialspalt mit dem Federteller ausbildet, in welchen der Axialschieber zum Bewegen des Steuerringes aus der ersten Position in die zweite Position verschiebbar ist.

Besonders bevorzugt ist eine Transportsicherung vorgesehen, die wie folgt hergestellt werden kann: Der Federteller kann durch Antreiben der Gewindespindel bis gegen den Axialschieber anschlagend in Richtung der Längsachse verfahren werden, wenn sich der Steuerring in der ersten Position, also jener Position, in welcher er den wenigstens einen Riegel in der Verriegelungsposition blockiert, befindet. Durch das Anfahren des Federtellers an den Axialschieber wird wiederum der Steuerring in der ersten Position blockiert, sodass er den wenigstens einen Riegel nicht mehr freigeben kann. Ein Zurückdrehen der Gewindespindel stellt den Axialspalt zwischen dem Federteller und dem Axialschieber wieder her, sodass die Transportsicherung gelöst wird und die Schnellfahrfunktion, insbesondere Schnellschlussfunktion, wieder aktiviert ist.

Gemäß einer Ausführungsform der Erfindung ist eine Testeinrichtung vorgesehen, um die Schnellfahrfunktion, insbesondere Schnellschlussfunktion, ohne weitergehende Beeinträchtigung der Funktionsfähigkeit des Ventils beziehungsweise im laufenden Betrieb des Ventils zu testen. Insbesondere kann der Test bei vollständig geöffnetem Ventil, das heißt, bei vollständig vom Ventilsitz abgehobenem Ventilkörper durchgeführt werden. Die Testeinrichtung umfasst einen wahlweise betätigbaren Testaktuator, der zur Blockade des Lagergehäuses inmitten dessen Verschiebeweges betätigbar ist, insbesondere in einen mechanischen Eingriff mit dem Schlitten bringbar ist, um eine vollständige Verschiebung des Lagergehäuses nach Lösen der Verriegelungseinrichtung zu blockieren und nur eine anfängliche Verschiebung mittels der Schnellfahrfeder freizugeben. Somit wird zusätzlich zu dem bei einem "echten" schnellen Verfahren, insbesondere Schnellschluss, vorgesehenen Anschlagens des Ventilkörpers am Ventilsitz oder auch einem anderen "Standardbetriebanschlag" ein Testanschlag geschaffen, der ein testweises Auslösen der Verriegelungseinrichtung zulässt, ohne dass dabei das Ventil geschlossen wird.

Ein solcher Testaktuator kann beispielsweise einen in Radialrichtung zur Längsachse elektromagnetisch, pneumatisch, hydraulisch oder anderweitig betätigbaren Stößel umfassen, der in eine entsprechende radiale Aussparung im Lagergehäuse oder einem am Lagergehäuse angeschlossenen Bauteil eingreift, wobei die Aussparung vorzugsweise als Langloch ausgebildet ist. Wie dargelegt, kann auch ein Angriff an dem Schlitten erfolgen.

Gemäß einer alternativen Ausgestaltung weist der Testaktuator einen Klinkenmechanismus auf, beispielsweise wiederum mit einem oder mehreren in der Radialrichtung bewegbaren hakenförmigen Riegeln, die wahlweise zumindest mittelbar in den Verschiebeweg des Lagergehäuses bringbar sind, um für die Verschiebung des Lagergehäuses einen Testanschlag auszubilden.

Ein erfindungsgemäßes Ventil mit Schnellfahrfunktion, insbesondere Schnellschlussfunktion, weist ein Ventilgehäuse auf, das einen Ventilsitz ausbildet, und einen Ventilkörper, der relativ zum Ventilsitz verfahrbar ist, um einen zwischen Ventilsitz und Ventilkörper ausgebildeten Strömungsquerschnitt zwischen einer reinen Auf- und Zu-Position oder variabel einzustellen, wobei der Schlitten eines erfindungsgemäßen Ventilantriebs mit dem Ventilkörper verbunden ist.

Bevorzugt wird der erfindungsgemäße Ventilantrieb zur Betätigung eines Ventils, mit welchem ein Dampfstrom, Gasstrom, Wasserstrom, Ölstrom oder Druckluftstrom gesteuert oder geregelt wird, verwendet. Hierunter werden auch Medienströme mit einem Anteil der genannten Medien oder Mischung mit wenigstens einem der genannten Medien verstanden.

Durch die erfindungsgemäße axiale Verschiebung des Lagergehäuses beim schnellen Verfahren, insbesondere beim Schnellschluss, kann ein sicheres und schnell arbeitendes System erreicht werden, ohne Eingriff in die Mechanik der Verstellbewegung des Ventilantriebs in einem Steuer- oder Regelbetrieb, wenn das Ventil als Kombiventil ausgeführt ist. Durch die bevorzugte Anordnung der hakenförmigen Riegel und die Wahl des Drehpunktes und Fixierpunktes in Abstimmung mit der Hebellänge ergeben sich geringe Niederhaltekräfte für die Riegel, welche zugleich große Federlasten der Schnellfahrfeder halten können. Insbesondere ergeben sich Niederhaltekräfte im Bereich des 0,01- bis 0,03-Fachen der Federkraft der Schnellfahrfeder.

Der Magnetaktuator zur Bewegung des Steuerrings kann bevorzugt einen elektrisch angesteuerten Hubmagneten umfassen, wobei bei der Stromlosschaltung des Hubmagneten der Steuerring durch die Federkraft, insbesondere des Federsystems, in seine zweite Position bewegt wird, um den wenigstens einen Riegel freizugeben.

Da die Schnellfahrfeder im normalen Regelbetrieb des Stellantriebs nicht mitbewegt wird, wird sie beim schnellen Verfahren, insbesondere beim Schnellschluss, immer aus ihrem voll gespannten Zustand heraus ausgelöst. Zudem wirkt unabhängig von der Position des Schlittens stets die volle Federkraft der Schnellfahrfeder zu Beginn der Auslösung des schnellen Verfahrens, insbesondere des Schnellschlusses.

Um Aufprallkräfte beim schnellen Verfahren, insbesondere beim Schnellschluss, zu dämpfen, ist bevorzugt wenigstens ein Stoßdämpfer vorgesehen, gegen welchen das Lagergehäuse zumindest mittelbar anschlägt. Beispielsweise sind mehrere parallelgeschaltete mechanische Dämpfer, insbesondere mit annähernd linearer Kennlinie vorgesehen, mit denen die Schließzeit beim schnellen Verfahren, insbesondere beim Schnellschluss, bestimmt werden kann.

Bevorzugt wird zum sicheren Einsteuern des Ventilantriebs der Axialschieber der Verriegelungseinrichtung über den Einrastpunkt der Verriegelungseinrichtung hinaus verschoben, das heißt, die Verschiebung wird fortgesetzt, auch wenn der Riegel seine Verriegelungsposition eingenommen hat, bis der Axialschieber eine Referenzposition erreicht, von wo aus er dann durch Antreiben der Gewindespindel wieder zurück in eine anfängliche Arbeitsposition bewegt wird. Die Referenzposition kann beispielsweise durch Schließen eines Elektromagneten beziehungsweise dem damit verbundenen Stromabfall erkannt werden, wenn beispielsweise der Axialschieber am Magnetaktuator anschlägt.

Es kann eine elektronische Steuervorrichtung vorgesehen sein, welche die Positionsregelung und die Antriebssteuerung des Ventilantriebs steuert. Sie kann die Vorspannung der Schnellfahrfeder geeignet einstellen, ferner die Verriegelung der Verriegelungseinrichtung und die geeignete Nullpunktlage, das heißt anfängliche Arbeitsposition nach Inbetriebnahme des Ventilantriebs und/oder nach dem Auslösen eines schnellen Verfahrens, insbesondere eines Schnellschlusses.

Um die Position des Schlittens abzustimmen, kann der Ventilantrieb in einem Langsam-Fahrmodus angetrieben werden. Nach Erreichen einer geschlossenen Stellung des Ventils kann über die Erfassung eines Stromanstiegs im Antriebsmotor die korrekte Schließstellung erfasst werden. Anschließend kann der Antrieb in seine vollständig geöffnete Stellung verfahren werden und erneut über Erfassung des notwendigen Motorstroms der Anschlag in der vollständig geöffneten Stellung erfasst werden. Insbesondere, wenn in diesem Zustand die Schnellfahrfeder vollständig gespannt ist und der Steuerring am Magnetaktuator (Haltemagneten) anliegt, so kann der Magnetaktuator eingeschaltet werden, um den wenigstens einen Riegel und den damit verbundenen mechanischen Eingriff im Lagergehäuse zu halten.

Wenn nun der Antrieb in die Gegenrichtung bewegt wird, so wird der mechanische Anschlag verlassen und innerhalb von einem nur kleinen Verfahrweg, der in der Regel nur wenige Millimeter beträgt, fällt der erfassbare Motorstrom unter eine parametrierbare Schwelle. Die Federkraft der Schnellfahrfeder wird nun allein von der Verriegelungseinrichtung gehalten.

Bevorzugt kann nun der parametrierte Arbeitshub des Ventilantriebs in Schließrichtung verfahren und überfahren werden, damit der Motorstrom wieder über eine parametrierbare Schwelle ansteigt. Hier ist dann der innere mechanische Anschlag des Ventilantriebs oder der mechanische Anschlag des angekuppelten Ventils, beispielsweise Dampfventils, erreicht. Somit kann eine Nullsetzung einer Ist-Positionsmessung erfolgen und der Normalbetrieb kann freigegeben werden, um den Ventilantrieb entsprechend eines vorgegebenen Sollwertes in eine bestimmte Hubstellung zu verfahren.

Die Erfindung soll nachfolgend anhand eines Ausführungsbeispiels und den Figuren exemplarisch beschrieben werden.

### Es zeigen:

- Figur 1: eine Darstellung eines Ausführungsbeispiels eines erfindungsgemäßen Ventilantriebs;
- Figur 2: einen Ausschnitt aus der Figur 1 im Bereich der Verriegelungseinrichtung;
- Figur 3: ein Ausführungsbeispiel für eine Testeinrichtung;
- Figur 4: ein weiteres Ausführungsbeispiel für eine Testeinrichtung;
- Figur 5: eine schematische Darstellung eines Ventils mit einem entsprechenden Ventilantrieb.

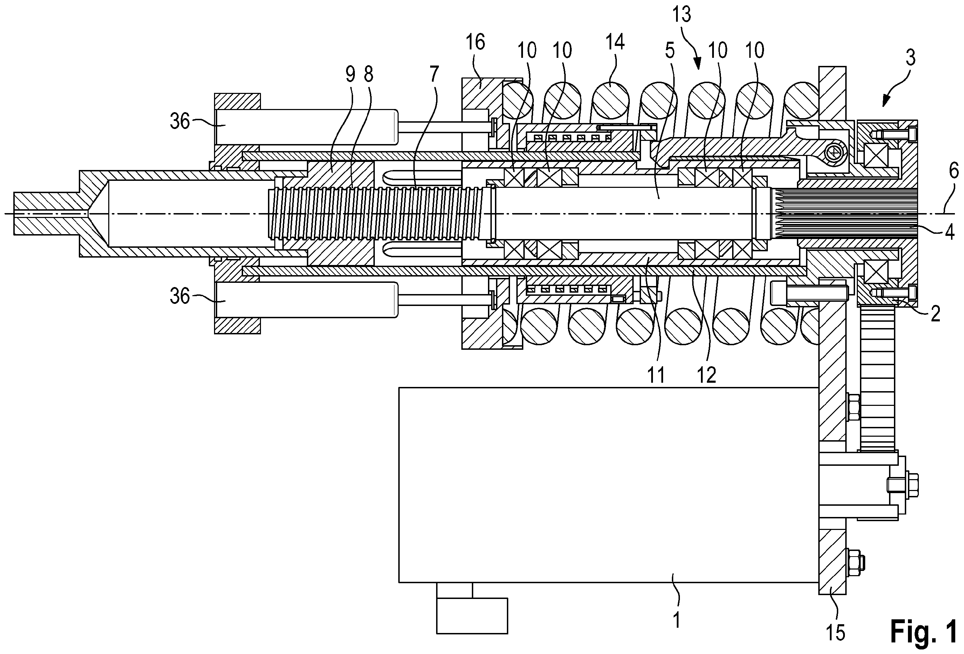

Der in der Figur 1 dargestellte Ventilantrieb wird mittels eines Elektromotors 1 angetrieben. Der Elektromotor 1 treibt dabei über ein Getriebe, hier eine Stirnverzahnung, ein Eingangsrad 2 eines Drehantriebseingangs 3 des Ventilantriebs an. Das Eingangsrad 2 weist im gezeigten Ausführungsbeispiel eine entsprechende Außenverzahnung auf.

Das Eingangsrad 2 ist über eine Steckverzahnung 4 mit einer Gewindespindel 5 treibend verbunden. Im gezeigten Ausführungsbeispiel weist die Steckverzahnung 4 eine derartige Länge in Richtung der Längsachse 6 auf, dass die Gewindespindel 5 in Richtung der Längsachse 6 weg vom Eingangszahnrad 2 verschoben werden kann, ohne dass der Eingriff des Eingangsrades 2 mit der Steckverzahnung 4 verloren geht.

An dem der Steckverzahnung 4 abgewandten axialen Ende weist die Gewindespindel 5 ein Außengewinde 7 auf, das im Eingriff mit einem Innengewinde 8 eines Schlittens 9 steht. Der Schlitten 9 ist gegen eine Verdrehung gesichert, beispielsweise über eine Passfeder gegen Verdrehung im Stützrohr 12 arretiert. Somit wird durch Drehantreiben der Gewindespindel 5 der Schlitten 9 drehrichtungsabhängig in Richtung der Längsachse 6 verfahren. Die Gewindespindel 5 und der Schlitten 9 bilden demnach ein Schraubgetriebe, um eine Drehbewegung in eine Linearbewegung umzuwandeln.

Am Schlitten 9 ist ein Aktuator für einen in der Figur 1 nicht näher dargestellten Ventilkörper oder unmittelbar ein Ventilschaft eines entsprechenden Ventilkörpers angeschlossen, sodass der Ventilkörper zusammen mit dem Schlitten 9 in Richtung der Längsachse 6 bewegt wird.

Die Gewindespindel 5 ist in einem axialen Abschnitt, der zwischen der Steckverzahnung 4 und dem Außengewinde 7 positioniert ist, mit Lagerstellen 10, die ein Axial-Radial-Lager ausbilden, im Lagergehäuse 11 gelagert. Im gezeigten Ausführungsbeispiel umfasst das Lagergehäuse 11 einen Hohlzylinder, der in Richtung der Längsachse 6 verschiebbar im Stützrohr 12 gelagert ist. Somit kann das Lagergehäuse 11 zusammen mit den Lagerstellen 10, der darin gelagerten Gewindespindel 5, dem darauf gelagerten Schlitten 9 und damit dem hier nicht im Einzelnen dargestellten Ventilkörper in Richtung der Längsachse 6 verschoben werden.

Das Lagergehäuse 11 wird durch eine Verriegelungseinrichtung 13 gegen eine solche Verschiebung in Richtung der Längsachse 6 blockiert, solange die Verriegelungseinrichtung 13 nicht gelöst wird. Wenn hingegen die Verriegelungseinrichtung 13 gelöst wird, so drückt eine Schnellschlussfeder (allgemein Schnellfahrfeder) 14, die einerseits gegen ein Ventilantriebgehäuse 15 abgestützt ist, welches das Stützrohr 12 trägt, und die andererseits gegen einen Federteller 16 abgestützt ist, der starr am Lagergehäuse 11 befestigt ist, das Lagergehäuse 11 in Richtung der Längsachse 6 weg von dem Eingangsrad 2 und damit in Richtung des hier nicht dargestellten Ventilkörpers beziehungsweise eines diesem zugeordneten Ventilsitzes, um das Ventil zu schließen. Dies ist der sogenannte Schnellschluss des Ventilantriebs beziehungsweise des mit diesem angetriebenen Ventils.

Im normalen Regelzustand hingegen hält die Verriegelungseinrichtung 13 die Schnellschlussfeder 14 in ihrem vorgespannten Zustand und das Lagergehäuse 11 in seiner in der Figur 1 dargestellten nicht ausgefahrenen Position, und eine Verstellung des Ventilkörpers erfolgt allein durch Verschieben des Schlittens 9 mittels einer über das Eingangsrad 2 eingeleiteten Drehbewegung der Gewindespindel 5.

Im gezeigten Ausführungsbeispiel umschließt die Schnellschlussfeder 14 das Stützrohr 12 und das Lagergehäuse 11 auf deren radial äußeren Umfang. Somit kann die Schnellschlussfeder 14 mit einem vergleichsweise großen Durchmesser ausgeführt werden. Auch die Verriegelungseinrichtung 13 ist im gezeigten Ausführungsbeispiel vollständig innerhalb der Schnellschlussfeder 14 positioniert.

Es sind Stoßdämpfer 36 vorgesehen, die im Schnellschlussfall die Bewegung des Lagergehäuses 11 in Richtung der Längsachse 6 dämpfen. Es kann ein Stoßdämpfer 36 ausreichend sein. Bevorzugt ist der wenigstens eine Stoßdämpfer 36 als Verschleißteil austauschbar. Hierzu bietet sich die gezeigte Positionierung im Bereich eines axialen Endes der Gewindespindel 5 an. Im gezeigten Ausführungsbeispiel greift der wenigstens eine Stoßdämpfer 36 auf einer axial entgegengesetzten Seite wie die Schnellschlussfeder 14 am Federteller 16 an, sowie mit dem entgegengesetzten axialen Ende beispielsweise am Ventilantriebgehäuse 15 und/oder einem Flansch am Stützrohr 12.

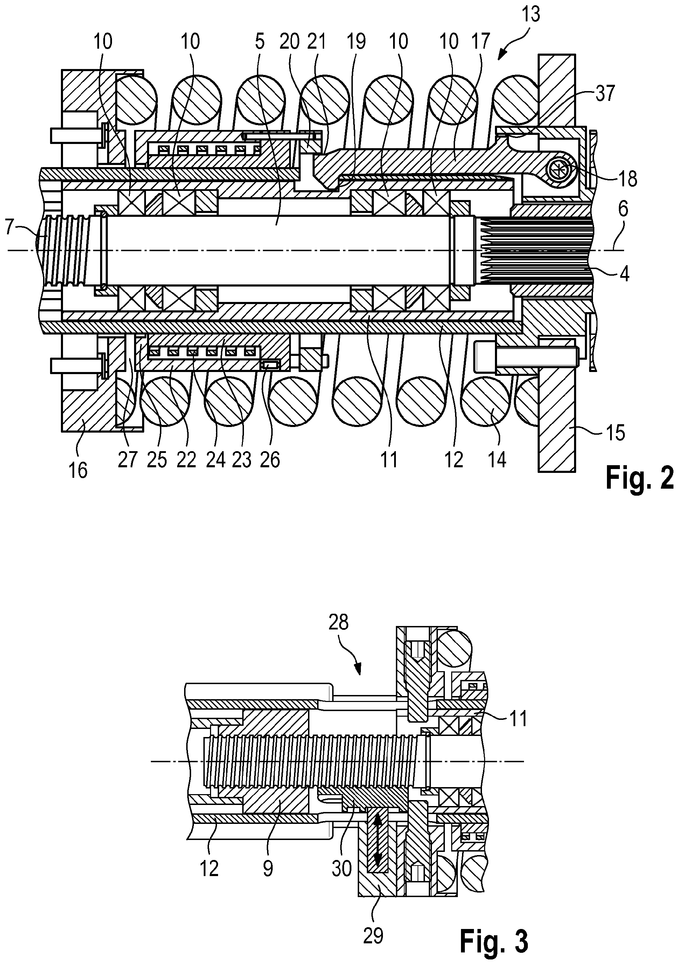

Die Verriegelungseinrichtung 13 soll nachfolgend anhand des in der Figur 2 dargestellten Ausschnitts aus der Figur 1 erläutert werden. So weist im gezeigten Ausführungsbeispiel die Verriegelungseinrichtung 13 wenigstens einen, bevorzugt eine Vielzahl von hakenförmigen Riegeln 17 auf. Die hakenförmigen Riegel 17 sind beispielsweise in der Umfangsrichtung fluchtend zueinander über dem Umfang des Lagergehäuses 11 verteilt positioniert. Die Funktion der Riegel 17 soll nachfolgend anhand des in dem Axialschnitt in der Figur 2 dargestellten einen Riegel 17 erläutert werden. Der Riegel 17 weist eine tangential zur Längsachse 6 beziehungsweise zum Lagergehäuse 11 verlaufende Drehachse 18 auf, über welche er radial zum Lagergehäuse 11 beweglich ist. In einer Verriegelungsposition, die in der Figur 2 dargestellt ist, greift der Riegel 17 radial von außen in das Lagergehäuse 11 ein und fixiert das Lagergehäuse 11 an einem Fixierpunkt 19, der durch einen axialen Anschlag im Lagergehäuse 11 gebildet wird, gegen Verschieben des Lagergehäuses 11 in Richtung der Längsachse 6 aufgrund der Vorspannkraft der Schnellschlussfeder 14. Der Fixierpunkt 19 ist insbesondere auf einem kleineren Durchmesser positioniert als die Drehachse 18. Der Eingriff des Riegels 17 in das Lagergehäuse 11 kann durch eine Aussparung beispielweise ein Langloch im Stützrohr 12 erfolgen.

Der Riegel 17 wird wiederum selbst von einem Steuerring 20 blockiert, der den Riegel 17 an einem axialen Ende radial von außen übergreift und so verhindert, dass sich der Riegel 17 radial nach außen durch Verdrehen um die Drehachse 18 bewegt. Dabei kann der Steuerring 20 oder, wie dargestellt, der Riegel 17 eine in dem gezeigten Axialschnitt schräg zur Längsachse 6 verlaufende Oberfläche 21 aufweisen, die dafür sorgt, dass beim Aufschieben des Steuerrings 20 in Richtung der Längsachse 6 auf den Riegel 17 der Riegel 17 radial nach innen gedrückt wird, um in den Kontakt mit dem Fixierpunkt 19 zu gelangen.

Wenn hingegen der Steuerring 20 in Richtung weg vom Riegel 17 geschoben wird und den Riegel 17 auf dessen radial äußeren Seite freigibt, so kann, weil der Riegel 17 als selbstöffnender Riegel ausgeführt ist, das heißt, die sich einander im Fixierpunkt 19 gegenüberstehenden Oberflächen nicht selbsthemmend angeordnet sind, der Riegel 17 die Druckkraft der Schnellschlussfeder 14 nicht halten und bewegt sich radial nach außen, um das Lagergehäuse 11 zu dessen Verschiebung entlang der Längsachse 6 freizugeben.

Der Steuerring 20 wird mittels des an diesem angeschlossenen Axialschiebers 22 so lange in seiner ersten, in der Figur 2 dargestellten Position gehalten, in welcher er den Riegel 17 in der Verriegelungsposition hält, wie der Axialschieber 22 von der elektromagnetischen Kraft des Magnetaktuators 23 gehalten wird. Der Magnetaktuator 23 weist eine entsprechende Wicklung 24 auf, die durch Bestromung eine Magnetkraft auf ein Anzugselement 25 des Magnetaktuators 23 ausübt und dadurch das Anzugselement 25 anliegend oder mit einem minimalen vorgegebenen Spalt beabstandet zu einer Stirnseite des Magnetaktuators 23 hält, wobei in dieser Position wiederum der Steuerring 20 radial außen auf dem Riegel 17 gehalten wird.

Wenn hingegen die Magnetkraft des Magnetaktuators 23 nicht mehr ausreichend ist, weil der Magnetaktuator 23 zum Beispiel stromlos geschaltet wird, so bewegt sich der Axialschieber 22 und mit diesem der daran angeschlossene Steuerring 20 in Richtung weg vom Riegel 17. Die notwendige Verstellkraft wird durch einen Federspeicher 26 erzeugt, der beispielsweise zunächst eine vergleichsweise große Losreißkraft erzeugt, die eventuelle Anbackungen des Anzugselementes 25 am Magnetaktuator 23 löst, und anschließend eine vergleichsweise geringere Verschiebekraft erzeugt, um das Anzugselement 25 in Richtung der Längsachse 6 vom Magnetaktuator 23 zu entfernen. Im gezeigten Ausführungsbeispiel greift der Federspeicher 26 beispielsweise stirnseitig einerseits am Axialschieber 22 und andererseits an einem radialen Vorsprung des Magnetaktuators 23, der wiederum von außen am Stützrohr 12 fixiert ist, an.

Das Spannen der Schnellschlussfeder 14 kann besonders einfach dadurch erfolgen, dass die Gewindespindel 5 mittels des Elektromotors 1 (siehe die Figur 1) angetrieben wird, bis sich der Schlitten 4 zumindest mittelbar, beispielsweise über den Ventilkörper, an einer Gegenfläche, beispielsweise dem Ventilsitz, abstützt, sodass durch weiteres Drehantreiben der Gewindespindel 5 die Gewindespindel 5 zusammen mit dem Lagergehäuse 11 in Richtung des Drehantriebeingangs 3 bewegt wird, wobei zugleich der Federteller 16 über den Axialschieber 22 den Steuerring 20 mitnimmt und über den Riegel 17 schiebt, sodass der Riegel 17 in die für diesen vorgesehene Aussparung im Lagergehäuse 11 radial nach innen verschoben wird. Wenn anschließend die Gewindespindel 5 wieder etwas zurückgedreht wird, gelangt der Riegel 17 in Kontakt mit dem Fixierpunkt 19 und die Gewindespindel 5 befindet sich in ihrer Nullstellung.

Um ein sicheres Verbringen des wenigstens einen Riegels 17 in die Aussparung im Lagergehäuse 11 zu gewährleisten, unabhängig von der jeweiligen Lage des Riegels 17 und von auf diesen wirkende Gewichtskräfte, kann eine elastische Rückstellfeder vorgesehen sein, die eine Radialkraft von außen nach innen auf den Riegel 17 ausübt. Die Rückstellfeder kann beispielsweise als Druckfeder 37 auf einem radial nach außen gerichteten Vorsprung des Riegels angeordnet sein und sich gegen ein Teil des Ventilantriebgehäuses 15 abstützen.

Ferner kann eine Transportsicherung des Ventilantriebs dadurch erreicht werden, dass die Gewindespindel 5 so weit verdreht wird, bis der Federteller 16 den Axialspalt 27, in welchen der Axialschieber 22 beim Auslösen des Schnellschlusses eintaucht, überbrückt und dadurch den Steuerring 20 erzwungenermaßen radial außerhalb des oder der Riegel 17 hält.

Bevorzugt ist eine Positionserfassung, insbesondere elektrische Positionserfassung beispielsweise mit einem Reedkontakt vorgesehen, welche die Position des Steuerrings 20 und/oder des Axialschiebers 22 erfasst. Damit kann beispielsweise eine Inbetriebnahme des Ventilantriebs vermieden werden, solange die Transportsicherung nicht gelöst ist. Auch kann eine solche Positionserfassung zur Kalibrierung des Ventilantriebs verwendet werden.

In der Figur 3 ist eine Testeinrichtung 28 exemplarisch gezeigt, mit einem Testaktuator 29, der zur Blockade des Lagergehäuses 11 zumindest mittelbar in den Verschiebeweg des Lagergehäuses 11 verbringbar ist, sodass sich bei aktivem Testaktuator 29 das Lagergehäuse 11 nur über einen Teil seines Verschiebeweges bewegen kann. Im gezeigten Ausführungsbeispiel weist das Lagergehäuse 11 eine entsprechende axiale Verlängerung auf, in die der Testaktuator 29 formschlüssig eintaucht. Alternativ könnte der Testaktuator 29 auch in den Schlitten 9 entsprechend formschlüssig eintauchen.

Die Testeinrichtung 28 ermöglicht einen Test des Schnellschlusses bei geöffnetem Ventil, das heißt ohne dass sich der Ventilkörper bis auf den Ventilsitz bewegt.

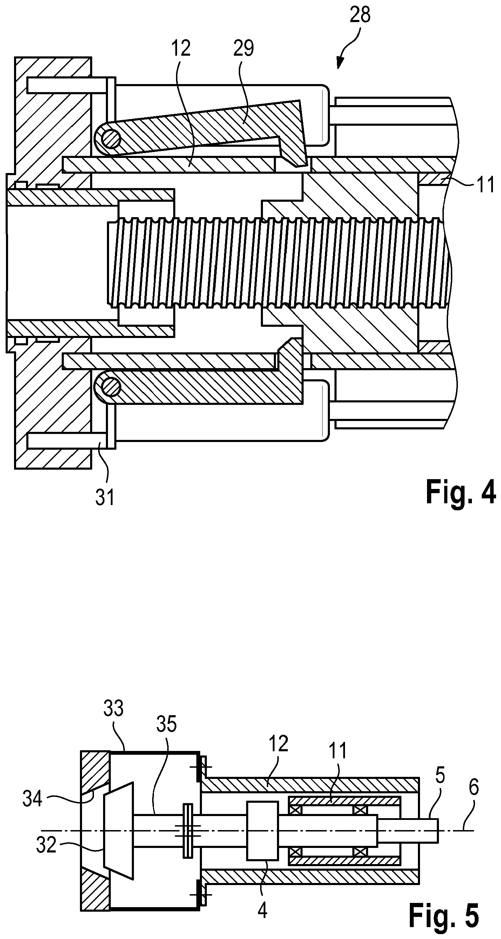

In der Figur 4 ist schematisch eine alternative Ausführungsform einer entsprechenden Testeinrichtung 28 gezeigt. Bei dieser Ausgestaltung sind die Testaktuatoren 29 als hakenförmige Riegel ausgeführt, die entsprechend radial von außen durch das Stützrohr 12 hindurchtauchen können, um das Lagergehäuse 11 gegen eine weitere Verschiebung zu blockieren. Die Testaktuatoren 29 können dabei durch axiale Stößel 31 betätigt werden, beispielsweise durch elektromagnetische Stößel.

In der Figur 5 ist sehr schematisch ein Ventil mit einem entsprechenden Ventilantrieb gezeigt, umfassend einen Ventilkörper 32, ein Ventilgehäuse 33 mit einem Ventilsitz 34 und einem Ventilschaft 35. Das Ventilgehäuse 33 ist starr am Stützrohr 12 angeschlossen, der Ventilschaft 35 am Schlitten 4. Es ist somit eine weitgehend konzentrische Ausrichtung entlang der Längsachse 6 möglich.

Obwohl der Erfindung zuvor anhand eines Ventilantriebs mit Schnellschlussfunktion dargestellt wurde, ist die Erfindung auch bei einem Ventilantrieb anwendbar, der im Auslösefall ein schnelles oder schlagartiges Öffnen des Ventils bewirkt (Schnellöffnungsfunktion). Dementsprechend können beispielsweise die Verriegelungseinrichtung 13 und die mit ihr zusammenarbeitenden Bauteile am anderen axialen Ende der Gewindespindel 5 positioniert werden, dass die Wirkrichtung der Schnellschlussfeder 14, die dann auch Schnellöffnungsfeder genannt werden könnte, in Richtung weg vom Ventilkörper 32 gerichtet ist. Der Drehantriebseingang 3 und der Schlitten 9 könnten hingegen an der gezeigten Position verbleiben. Alternativ kann auch das Ventil modifiziert werden, so dass die Schnellöffnungsfunktion erreicht wird.

### Bezugszeichenliste

- 1: Elektromotor
- 2: Eingangsrad
- 3: Drehantriebeingang
- 4: Steckverzahnung
- 5: Gewindespindel
- 6: Längsachse
- 7: Außengewinde
- 8: Innengewinde
- 9: Schlitten
- 10: Lagerstelle
- 11: Lagergehäuse
- 12: Stützrohr
- 13: Verriegelungseinrichtung
- 14: Schnellfahrfeder/Schnellschlussfeder
- 15: Ventilantriebgehäuse
- 16: Federteller
- 17: Riegel
- 18: Drehachse
- 19: Fixierpunkt
- 20: Steuerring
- 21: Oberfläche
- 22: Axialschieber
- 23: Magnetaktuator
- 24: Wicklung
- 25: Anzugselement
- 26: Federspeicher
- 27: Axialspalt
- 28: Testeinrichtung
- 29: Testaktuator
- 30: Verlängerung
- 31: Stößel
- 32: Ventilkörper
- 33: Ventilgehäuse
- 34: Ventilsitz
- 35: Ventilschaft
- 36: Stoßdämpfer
- 37: Druckfeder

## Patentansprüche

1. Ventilantrieb mit Schnellfahrfunktion, umfassend
1.1 einen Drehantriebseingang (3);
1.2 eine am Drehantriebseingang (3) angeschlossene oder durch diesen gebildete Gewindespindel (5);
1.3 einen im Gewindeeingriff mit der Gewindespindel (5) stehenden Schlitten (9), um ein Schraubgewinde auszubilden, wobei
1.4 der Schlitten (9) mechanisch mit einem Ventilkörper (32) verbunden oder verbindbar ist und in Richtung einer Längsachse (6) verfahrbar ist; wobei 1.5 ein Lagergehäuse (11) vorgesehen ist, in welchem die Gewindespindel (5) drehbar um die Längsachse (6) und ortsfest in Richtung der Längsachse (6) gelagert ist; und
1.6 das Lagergehäuse (11) mittels einer lösbaren Verriegelungseinrichtung (13) entgegen der Vorspannkraft einer Schnellfahrfeder (14) des Ventilantriebs gegen eine Verschiebung des gesamten Lagergehäuses (11) zusammen mit der darin gelagerten Gewindespindel (5) in Richtung der Längsachse (6) gehalten wird;
**dadurch gekennzeichnet, dass**
die Verriegelungseinrichtung (13) wenigstens einen hakenförmigen Riegel (17) umfasst, der in Radialrichtung derart zum Lagergehäuse (11) bewegbar ist, dass er in einer ersten Position, der Verriegelungsposition, formschlüssig in das Lagergehäuse (11) eingreift und in einer zweiten Position, der Schnellfahrposition, den Eingriff in das Lagergehäuse (11) zur Bewegung des Lagergehäuses (11) beaufschlagt durch die Vorspannkraft der Schnellfahrfeder (17) in Richtung der Längsachse (6) aufhebt.

2. Ventilantrieb gemäß Anspruch 1, **dadurch gekennzeichnet, dass** das Lagergehäuse (11) einen Hohlzylinder umfasst, welcher Lagerstellen (10), insbesondere Wälzlager, und zumindest einen axialen Abschnitt der Gewindespindel (5) umschließt.

3. Ventilantrieb gemäß Anspruch 2, **dadurch gekennzeichnet, dass** die Schnellfahrfeder (14), die insbesondere als Druckfeder oder Druckspiralfeder ausgebildet ist, das Lagergehäuse (11) radial außen umschließt.

4. Ventilantrieb gemäß einem der Ansprüche 1 bis 3, **dadurch gekennzeichnet, dass** der wenigstens eine hakenförmige Riegel (17) radial von außen formschlüssig in das Lagergehäuse (11) eingreift.

5. Ventilantrieb gemäß Anspruch 4, **dadurch gekennzeichnet, dass** ein den Riegel (17) in der Radialrichtung umschließender Steuerring (20) vorgesehen ist, der in Richtung der Längsachse (6) bewegbar ist zwischen einer ersten Position, in welcher er den Riegel (17) gegen dessen Bewegung aus der Verriegelungsposition blockiert, und einer zweiten Position, in welcher er die Bewegung des Riegels (17) freigibt.

6. Ventilantrieb gemäß Anspruch 4 oder 5, **dadurch gekennzeichnet, dass** der Riegel (17) als selbstöffnender Riegel (17) ausgeführt ist.

7. Ventilantrieb gemäß Anspruch 5 oder 6, **dadurch gekennzeichnet, dass** ein Magnetaktuator (23) vorgesehen ist, der den Steuerring (20) entgegen einer Federkraft in seiner ersten Position hält.

8. Ventilantrieb gemäß Anspruch 7, **dadurch gekennzeichnet, dass** ein Federspeicher (26) vorgesehen ist, der die Federkraft erzeugt, wobei der Federspeicher (26) ein Federsystem umfasst, mit wenigstens einer ersten Feder und einer zweiten Feder insbesondere mit zueinander verschiedenen Federkennlinien, wobei die erste Feder nur über einen Teil eines Wegbereichs der zweiten Feder wirksam ist, um bei der Bewegung des Steuerrings (20) aus seiner ersten Position in die zweite Position eine anfänglich verstärkte Losreißkraft zu erzeugen.

9. Ventilantrieb gemäß einem der Ansprüche 1 bis 8, **dadurch gekennzeichnet, dass** der Drehantriebseingang (3) ein Eingangsrad (2), insbesondere Eingangszahnrad umfasst, das über eine Steckverbindung mit der Gewindespindel (5) verbunden ist, wobei die Gewindespindel (5) in Richtung der Längsachse (6) verschiebbar in der Steckverbindung gelagert ist, um gemeinsam mit dem Lagergehäuse (11) relativ zum Eingangsrad (2) verschoben zu werden.

10. Ventilantrieb gemäß einem der Ansprüche 4 bis 9, **dadurch gekennzeichnet, dass** die Verriegelungseinrichtung (13) eine Vielzahl entsprechender über den Umfang des Lagergehäuses (11) verteilt angeordnete hakenförmige Riegel (17) umfasst.

11. Ventilantrieb gemäß der Ansprüche 5 und 10, **dadurch gekennzeichnet, dass** der Steuerring (20) eine Vielzahl von Riegeln (17), insbesondere alle Riegel (17) gemeinsam, insbesondere radial außen, umschließt.

12. Ventilantrieb gemäß einem der Ansprüche 4 bis 11, **dadurch gekennzeichnet, dass** der wenigstens eine hakenförmige Riegel (17) um eine tangential zur Längsachse (6) ausgerichtete Drehachse (18) verdrehbar ist und in der Verriegelungsposition an einem Fixierpunkt (19) an dem Lagergehäuse (11) angreift, wobei der Fixierpunkt (19) auf einem anderen Durchmesser, insbesondere kleineren Durchmesser, als die Drehachse (18) positioniert ist.

13. Ventilantrieb gemäß einem der Ansprüche 1 bis 12, **dadurch gekennzeichnet, dass** der Schlitten (9) zumindest mittelbar in Richtung der Längsachse (6) abstützbar ist und im abgestützten Zustand des Schlittens (9) die Schnellfahrfeder (14) durch Antreiben der Gewindespindel (5) und infolgedessen durch Verschieben des Lagergehäuses (11) in der Längsrichtung (6) spannbar ist.

14. Ventilantrieb gemäß einem der Ansprüche 1 bis 13, **dadurch gekennzeichnet, dass** das Lagergehäuse (11) in Richtung der Längsachse (6) verschiebbar in einem Stützrohr (12) des Ventilantriebs gelagert ist, das ein Axialende zum Anschluss eines Ventilgehäuses (33) aufweist.

15. Ventilantrieb gemäß der Ansprüche 4 und 14, **dadurch gekennzeichnet, dass** der wenigstens eine Riegel (17) drehbar am Stützrohr (12) gelagert ist.

16. Ventilantrieb gemäß einem der Ansprüche 5 bis 15, **dadurch gekennzeichnet, dass** der Steuerring (20) zum Spannen der Schnellfahrfeder (14) gemeinsam mit dem Lagergehäuse (11) in der Längsrichtung (5) verfahrbar ist und infolgedessen über den wenigstens einen Riegel (17) zu dessen Blockade verschiebbar ist.

17. Ventilantrieb gemäß Anspruch 16, **dadurch gekennzeichnet, dass** der wenigstens eine Riegel (17) auf einer dem Steuerring (20) zugewandten Oberfläche (21) eine Schräge zur Längsachse (6) aufweist, an welcher der Steuerring (20) angreift, und/oder der Steuerring (20) auf einer dem Riegel (17) zugewandten Oberfläche eine Schräge zur Längsachse (6) aufweist, mit welcher er an dem wenigstens einen Riegel (17) angreift.

18. Ventilantrieb gemäß einem der Ansprüche 14 bis 17, **dadurch gekennzeichnet, dass** ein am Lagergehäuse (11) fixierter Federteller (16) vorgesehen ist, welcher das Stützrohr (12) über dessen radial äußeren Umfang umschließt und an welchem die Schnellfahrfeder (14) abgestützt ist.

19. Ventilantrieb gemäß der Ansprüche 5 und 18, **dadurch gekennzeichnet, dass** die Verriegelungseinrichtung (13) einen Axialschieber (22) umfasst, der zur Verschiebung des Steuerrings (20) am Steuerring (20) angeschlossen ist, wobei der Axialschieber (22) in Richtung der Längsachse (6) neben dem Federteller (16) positioniert ist und in einem Betriebszustand des Ventilantriebs einen Axialspalt (27) mit dem Federteller (16) ausbildet, in welchen der Axialschieber (22) zum Bewegen des Steuerrings (20) aus der ersten Position in die zweite Position verschiebbar ist.

20. Ventilantrieb gemäß Anspruch 19, **dadurch gekennzeichnet, dass** der Federteller (16) für einen Transportzustand durch Antreiben der Gewindespindel (5) bis gegen den Axialschieber (22) anschlagend verfahrbar in Richtung der Längsachse (6) ist, wenn sich der Steuerring (20) in der ersten Position befindet.

21. Ventilantrieb gemäß einem der Ansprüche 1 bis 20, **dadurch gekennzeichnet, dass** eine Testeinrichtung (28) vorgesehen ist, umfassend einen wahlweise betätigbaren Testaktuator (29), der zur Blockade des Lagergehäuses (11) inmitten dessen Verschiebeweges betätigbar ist, insbesondere in einen mechanischen Eingriff mit dem Schlitten (9) bringbar ist, um eine vollständige Verschiebung des Lagergehäuses (11) nach Lösen der Verriegelungseinrichtung (13) zu blockieren und nur eine anfängliche Verschiebung mittels der Schnellfahrfeder (14) freizugeben.

22. Ventil mit Schnellfahrfunktion
mit einem Ventilgehäuse (33), das einen Ventilsitz (34) ausbildet, und mit einem Ventilkörper (32), der relativ zum Ventilsitz (34) verfahrbar ist, um einen zwischen Ventilsitz (34) und Ventilkörper (32) ausgebildeten Strömungsquerschnitt zwischen einer reinen Auf- und Zu-Position oder variabel einzustellen,
**gekennzeichnet durch** einen Ventilantrieb gemäß einem der Ansprüche 1 bis 21, wobei der Ventilkörper (32) mit dem Schlitten (9) verbunden ist.

23. Verwendung eines Ventilantriebs gemäß einem der Ansprüche 1 bis 21 zur Betätigung eines Ventils, mit welchem ein Dampfstrom, Gasstrom, Wasserstrom, Ölstrom oder Druckluftstrom gesteuert oder geregelt wird.

## Claims

1. Valve drive with a snap-action function, comprising
1.1 a rotary drive input (3);
1.2 a threaded spindle (5) which is connected to the rotary drive input (3) or is formed by way of it;
1.3 a slide (9) which is in threaded engagement with the threaded spindle (5), in order to configure a screw thread,
1.4 the slide (9) being connected or being connectable mechanically to a valve body (32) and being movable in the direction of a longitudinal axis (6);
1.5 a bearing housing (11) being provided, in which the threaded spindle (5) is mounted rotatably about the longitudinal axis (6) and in a stationary manner in the direction of the longitudinal axis (6); and
1.6 the bearing housing (11) being held, by means of a releasable locking device (13) counter to the prestressing force of a snap-action spring (14) of the valve drive, against a displacement of the entire bearing housing (11) together with the threaded spindle (5) mounted therein in the direction of the longitudinal axis (6);
**characterized in that**
the locking device (13) comprises at least one hook-shaped bar (17) which is movable in the radial direction with respect to the bearing housing (11) in such a way that it engages in a positively locking manner into the bearing housing (11) in a first position, the locking position, and cancels the engagement into the bearing housing (11) in a second position, the snap-action position, in order to move the bearing housing (11) loaded by way of the prestressing force of the snap-action spring (17) in the direction of the longitudinal axis (6).

2. Valve drive according to Claim 1, **characterized in that** the bearing housing (11) comprises a hollow cylinder which encloses bearing points (10), in particular antifriction bearings, and at least one axial portion of the threaded spindle (5).

3. Valve drive according to Claim 2, **characterized in that** the snap-action spring (14) which is configured, in particular, as a compression spring or compression coil spring encloses the bearing housing (11) radially on the outside.

4. Valve drive according to one of Claims 1 to 3, **characterized in that** the at least one hook-shaped bar (17) engages radially from the outside into the bearing housing (11) in a positively locking manner.

5. Valve drive according to Claim 4, **characterized in that** a control ring (20) which encloses the bar (17) in the radial direction is provided, which control ring (20) is movable in the direction of the longitudinal axis (6) between a first position, in which it blocks the bar (17) against is moving out of the locking position, and a second position, in which it releases the movement of the bar (17).

6. Valve drive according to Claim 4 or 5, **characterized in that** the bar (17) is configured as a self-opening bar (17) .

7. Valve drive according to Claim 5 or 6, **characterized in that** a magnetic actuator (23) is provided which holds the control ring (20) in its first position counter to a spring force.

8. Valve drive according to Claim 7, **characterized in that** a spring force accumulator (26) is provided which generates the spring force, the spring force accumulator (26) comprising a spring system, with at least a first spring and a second spring, in particular with spring characteristics which are different from one another, the first spring being active only over a part of a travel range of the second spring, in order to generate an initially boosted breakaway force during the movement of the control ring (20) out of its first position into the second position.

9. Valve drive according to one of Claims 1 to 8, **characterized in that** the rotary drive input (3) comprises an input wheel (2), in particular an input gearwheel, which is connected to the threaded spindle (5) via a spline connection, the threaded spindle (5) being mounted in the spline connection such that it can be displaced in the direction of the longitudinal axis (6), in order to be displaced together with the bearing housing (11) relative to the input wheel (2).

10. Valve drive according to one of Claims 4 to 9, **characterized in that** the locking device (13) comprises a multiplicity of corresponding hook-shaped bars (17) which are arranged distributed over the circumference of the bearing housing (11).

11. Valve drive according to Claims 5 and 10, **characterized in that** the control ring (20) encloses a multiplicity of bars (17), in particular all the bars (17) jointly, in particular radially on the outside.

12. Valve drive according to one of Claims 4 to 11, **characterized in that** the at least one hook-shaped bar (17) can be rotated about a rotational axis (18) which is oriented tangentially with respect to the longitudinal axis (6) and, in the locking position, acts at a fixing point (19) on the bearing housing (11), the fixing point (19) being positioned on a different diameter, in particular a smaller diameter, than the rotational axis (18) .

13. Valve drive according to one of Claims 1 to 12, **characterized in that** the slide (9) can be supported at least indirectly in the direction of the longitudinal axis (6), and, in the supported state of the slide (9), the snap-action spring (14) can be stressed by way of driving of the threaded spindle (5) and, as a consequence, by way of displacing of the bearing housing (11) in the longitudinal direction (6).

14. Valve drive according to one of Claims 1 to 13, **characterized in that** the bearing housing (11) is mounted in a support tube (12) of the valve drive such that it can be displaced in the direction of the longitudinal axis (6), which support tube (12) comprises an axial end for connecting a valve housing (33).

15. Valve drive according to Claims 4 and 14, **characterized in that** the at least one bar (17) is mounted rotatably on the support tube (12).

16. Valve drive according to one of Claims 5 to 15, **characterized in that** the control ring (20) can be moved to stress the snap-action spring (14) together with the bearing housing (11) in the longitudinal direction (5) and, as a consequence, can be displaced via the at least one bar (17) in order to block it.

17. Valve drive according to Claim 16, **characterized in that** the at least one bar (17) has, on a surface (21) which faces the control ring (20), a chamfer with respect to the longitudinal axis (6), on which chamfer the control ring (20) acts, and/or the control ring (20) has, on a surface which faces the bar (17), a chamfer with respect to the longitudinal axis (6), by way of which chamfer it acts on the at least one bar (17).

18. Valve drive according to one of Claims 14 to 17, **characterized in that** a spring collar (16) which is fixed on the bearing housing (11) is provided, which spring collar (16) encloses the support tube (12) over its radially outer circumference, and on which spring collar (16) the snap-action spring (14) is supported.

19. Valve drive according to Claims 5 and 18, **characterized in that** the locking device (13) comprises an axial slide (22) which is connected to the control ring (20) in order to displace the control ring (20), the axial slide (22) being positioned next to the spring collar (16) in the direction of the longitudinal axis (6) and, in an operating state of the valve drive, configures an axial gap (27) with the spring collar (16), into which axial gap (27) the axial slide (22) can be displaced in order to move the control ring (20) out of the first position into the second position.

20. Valve drive according to Claim 19, **characterized in that**, when the control ring (20) is situated in the first position, the spring collar (16) is movable, for a transport state, in the direction of the longitudinal axis (6) as far as to bear against the axial slide (22) by way of driving of the threaded spindle (5).

21. Valve drive according to one of Claims 1 to 20, **characterized in that** a test device (28) is provided, comprising a selectively actuable test actuator (29) which is actuable for blocking the bearing housing (11) in the middle of its displacement travel, in particular can be brought into mechanical engagement with the slide (9), in order to block a complete displacement of the bearing housing (11) after releasing of the locking device (13) and to release only an initial displacement by means of the snap-action spring (14).

22. Valve with a snap-action function
with a valve housing (33) which configures a valve seat (34), and with a valve body (32) which is movable relative to the valve seat (34), in order to adjust a flow cross section, configured between the valve seat (34) and the valve body (32), between a pure open-and-closed position or in a variable manner,
**characterized by** a valve drive according to one of Claims 1 to 21, the valve body (32) being connected to the slide (9) .

23. Use of a valve drive according to one of Claims 1 to 21 for actuating a valve, by way of which a steam flow, gas flow, water flow, oil flow or compressed air flow is controlled or regulated.

## Revendications

1. Entraînement de soupape à fonction de déplacement rapide, comprenant
1.1 une entrée d'entraînement en rotation (3) ;
1.2 une tige filetée (5) raccordée à l'entrée d'entraînement en rotation (3) ou formée par celle-ci ;
1.3 un chariot (9) en prise par filetage avec la tige filetée (5) pour former un filet,
1.4 le chariot (9) étant relié ou pouvant être relié mécaniquement à un corps de soupape (32) et pouvant être déplacé dans la direction d'un axe longitudinal (6) ;
1.5. un logement de palier (11) étant prévu, dans lequel la tige filetée (5) est montée de manière à pouvoir tourner autour de l'axe longitudinal (6) et de manière fixe dans la direction de l'axe longitudinal (6) ; et 1.6 le logement de palier (11) étant maintenu au moyen d'un dispositif de verrouillage amovible (13) à l'encontre de la force de précontrainte d'un ressort de déplacement rapide (14) de l'entraînement de soupape contre un coulissement de l'ensemble du logement de palier (11) conjointement avec la tige filetée (5) qui y est montée, dans la direction de l'axe longitudinal (6) ;
**caractérisé en ce que**
le dispositif de verrouillage (13) comprend au moins un verrou (17) en forme de crochet, qui est mobile dans la direction radiale par rapport au logement de palier (11) de telle sorte que, dans une première position, la position de verrouillage, il s'engage par complémentarité de forme dans le logement de palier (11) et, dans une deuxième position, la position de déplacement rapide, il relève l'engagement dans le logement de palier (11) pour déplacer le logement de palier (11) sous la sollicitation de la force de précontrainte du ressort de déplacement rapide (17) dans la direction de l'axe longitudinal (6).

2. Entraînement de soupape selon la revendication 1, **caractérisé en ce que** le logement de palier (11) comprend un cylindre creux, qui entoure des emplacements de palier (10), notamment des paliers à roulement, et au moins une section axiale de la tige filetée (5).

3. Entraînement de soupape selon la revendication 2, **caractérisé en ce que** le ressort de déplacement rapide (14), qui est notamment configuré sous forme de ressort de compression ou de ressort spiral de compression, entoure le logement de palier (11) radialement à l'extérieur.

4. Entraînement de soupape selon l'une quelconque des revendications 1 à 3, **caractérisé en ce que** l'au moins un verrou (17) en forme de crochet s'engage radialement de l'extérieur par complémentarité de forme dans le logement de palier (11).

5. Entraînement de soupape selon la revendication 4, **caractérisé en ce qu'**une bague de commande (20) entourant le verrou (17) dans la direction radiale est prévue, qui est mobile dans la direction de l'axe longitudinal (6) entre une première position, dans laquelle elle bloque le verrou (17) contre son déplacement à partir de la position de verrouillage, et une deuxième position, dans laquelle elle libère le déplacement du verrou (17).

6. Entraînement de soupape selon la revendication 4 ou 5, **caractérisé en ce que** le verrou (17) est réalisé sous la forme d'un verrou (17) à ouverture automatique.

7. Entraînement de soupape selon la revendication 5 ou 6, **caractérisé en ce qu'**un actionneur magnétique (23) est prévu, qui maintient la bague de commande (20) dans sa première position à l'encontre d'une force de ressort.

8. Entraînement de soupape selon la revendication 7, **caractérisé en ce qu'**un accumulateur à ressort (26) est prévu, qui génère la force de ressort, l'accumulateur à ressort (26) comprenant un système de ressort muni d'au moins un premier ressort et d'un deuxième ressort, ayant notamment avec des courbes caractéristiques de ressort différentes l'une de l'autre, le premier ressort n'agissant que sur une partie d'une plage de course du deuxième ressort, afin de générer une force d'arrachage initialement renforcée lors du déplacement de la bague de commande (20) à partir de sa première position dans la deuxième position.

9. Entraînement de soupape selon l'une quelconque des revendications 1 à 8, **caractérisé en ce que** l'entrée d'entraînement en rotation (3) comprend une roue d'entrée (2), notamment une roue dentée d'entrée, qui est reliée à la tige filetée (5) par l'intermédiaire d'une liaison par emboîtement, la tige filetée (5) étant montée dans la liaison par emboîtement de manière à pouvoir être amenée à coulisser dans la direction de l'axe longitudinal (6), afin d'être amenée à coulisser conjointement avec le logement de palier (11) par rapport à la roue d'entrée (2).

10. Entraînement de soupape selon l'une quelconque des revendications 4 à 9, **caractérisé en ce que** le dispositif de verrouillage (13) comprend une pluralité de verrous (17) en forme de crochets correspondants, agencés de manière répartie sur la périphérie du logement de palier (11) .

11. Entraînement de soupape selon les revendications 5 et 10, **caractérisé en ce que** la bague de commande (20) entoure une pluralité de verrous (17), notamment tous les verrous (17) ensemble, notamment radialement à l'extérieur.

12. Entraînement de soupape selon l'une quelconque des revendications 4 à 11, **caractérisé en ce que** l'au moins un verrou (17) en forme de crochet peut être amené à tourner autour d'un axe de rotation (18) orienté tangentiellement par rapport à l'axe longitudinal (6) et, dans la position de verrouillage, agit sur un point de fixation (19) sur le logement de palier (11), le point de fixation (19) étant positionné sur un autre diamètre, notamment un diamètre plus petit, que l'axe de rotation (18) .

13. Entraînement de soupape selon l'une quelconque des revendications 1 à 12, **caractérisé en ce que** le chariot (9) peut être soutenu au moins indirectement dans la direction de l'axe longitudinal (6) et, à l'état soutenu du chariot (9), le ressort de déplacement rapide (14) peut être tendu par entraînement de la tige filetée (5) et, par conséquent, par coulissement du logement de palier (11) dans la direction longitudinale.

14. Entraînement de soupape selon l'une quelconque des revendications 1 à 13, **caractérisé en ce que** le logement de palier (11) est monté de manière à pouvoir être amené à coulisser dans la direction de l'axe longitudinal (6) dans un tube de support (12) de l'entraînement de soupape, qui présente une extrémité axiale pour le raccordement d'un boîtier de soupape (33).

15. Entraînement de soupape selon les revendications 4 et 14, **caractérisé en ce que** l'au moins un verrou (17) est monté de manière rotative sur le tube de support (12) .

16. Entraînement de soupape selon l'une quelconque des revendications 5 à 15, **caractérisé en ce que** la bague de commande (20) destinée à tendre le ressort de déplacement rapide (14) peut être déplacée conjointement avec le logement de palier (11) dans la direction longitudinale (5) et peut par conséquent être amenée à coulisser sur l'au moins un verrou (17) pour le bloquer.

17. Entraînement de soupape selon la revendication 16, **caractérisé en ce que** l'au moins un verrou (17) présente, sur une surface (21) tournée vers la bague de commande (20), une obliquité par rapport à l'axe longitudinal (6), sur laquelle la bague de commande (20) agit, et/ou la bague de commande (20) présente, sur une surface tournée vers le verrou (17), une obliquité par rapport à l'axe longitudinal (6), avec laquelle elle agit sur l'au moins un verrou (17).

18. Entraînement de soupape selon l'une quelconque des revendications 14 à 17, **caractérisé en ce qu'**une coupelle de ressort (16) fixée sur le logement de palier (11) est prévue, qui entoure le tube de support (12) sur sa périphérie radialement extérieure et sur laquelle le ressort de déplacement rapide (14) est soutenu.

19. Entraînement de soupape selon les revendications 5 et 18, **caractérisé en ce que** le dispositif de verrouillage (13) comprend un coulisseau axial (22), qui est raccordé à la bague de commande (20) pour le coulissement de la bague de commande (20), le coulisseau axial (22) étant positionné dans la direction de l'axe longitudinal (6) à côté de la coupelle de ressort (16) et formant, dans un état de fonctionnement de l'entraînement de soupape, une fente axiale (27) avec la coupelle de ressort (16), dans laquelle le coulisseau axial (22) peut être amené à coulisser pour déplacer la bague de commande (20) à partir de la première position dans la deuxième position.

20. Entraînement de soupape selon la revendication 19, **caractérisé en ce que** la coupelle de ressort (16) peut être déplacée dans la direction de l'axe longitudinal (6) pour un état de transport par entraînement de la tige filetée (5) jusqu'à ce qu'elle vienne en butée contre le coulisseau axial (22), lorsque la bague de commande (20) se trouve dans la première position.

21. Entraînement de soupape selon l'une quelconque des revendications 1 à 20, **caractérisé en ce qu'**un dispositif de test (28) est prévu, comprenant un actionneur de test (29) pouvant être actionné au choix, qui peut être actionné pour bloquer le logement de palier (11) au milieu de son mouvement de coulissement, notamment qui peut être mis en prise mécanique avec le chariot (9), afin de bloquer un coulissement complet du logement de palier (11) après le détachement du dispositif de verrouillage (13) et de ne libérer qu'un coulissement initial au moyen du ressort de déplacement rapide (14).

22. Soupape à fonction de déplacement rapide, comprenant un boîtier de soupape (33), qui forme un siège de soupape (34), et comprenant un corps de soupape (32), qui peut être déplacé par rapport au siège de soupape (34) afin d'ajuster une section transversale d'écoulement formée entre le siège de soupape (34) et le corps de soupape (32) entre une position purement ouverte et fermée ou de manière variable,
**caractérisée par** un entraînement de soupape selon l'une quelconque des revendications 1 à 21, le corps de soupape (32) étant relié au chariot (9).

23. Utilisation d'un entraînement de soupape selon l'une quelconque des revendications 1 à 21 pour l'actionnement d'une soupape, avec laquelle un courant de vapeur, un courant de gaz, un courant d'eau, un courant d'huile ou un courant d'air comprimé est commandé ou régulé.
